Europäisches Patentamt

European Patent Office

Office européen des brevets

(11) Publication number: **0 236 626**
**A1**

# EUROPEAN PATENT APPLICATION

(21) Application number: 86309476.9

(22) Date of filing: 05.12.86

(51) Int. Cl.⁴ **H01B 3/12** , **H01G 4/12** ,
**C04B 35/00**

(30) Priority: 08.02.86 GB 8603160

(43) Date of publication of application:
16.09.87 Bulletin 87/38

(84) Designated Contracting States:
AT BE DE FR IT NL

(71) Applicant: STC PLC
10, Maltravers Street
London, WC2R 3HA(GB)

(72) Inventor: Alexander, John Henry
4147A, Zia Andorra
Santa Barbara California, CA93 110(US)

(74) Representative: Dennis, Mark Charles et al
STC Patent Department Edinburgh Way
Harlow Essex CM20 2SH(GB)

(54) Ceramic capacitor and dielectric compositions.

(57) A dielectric composition comprising one or more of the following, namely: non-stoichiometric lead magnesium niobate, non-stoichiometric lead zinc niobate and non-stoichiometric lead iron niobate; together with another relaxor material having a low Curie point, in particular lead magnesium tungstate. The addition of stoichiometric lead magnesium tungstate, up to l0 wt%, to a base material comprising all three of the above mentioned non-stoichiometric niobates serves to change the temperature coefficient of capacitance characteristics thereof from Y5V to Z5U and results in a dielectric composition with Z5U characteristics and high dielectric constant.

EP 0 236 626 A1

## CERAMIC CAPACITORS AND DIELECTRIC COMPOSITIONS

This invention relates to ceramic capacitors and in particular, but not exclusively, to multilayer ceramic capacitors and dielectric compositions for use therein.

A multilayer ceramic capacitor basically comprises a stack consisting of a plurality of dielectric members formed of a ceramic material, with electrodes positioned between the members. The electrodes may be screen-printed onto the ceramic material, in the unfired state thereof, using conductive inks. A stack of screen-printed dielectric members is assembled, pressed together, cut into individual components, if appropriate, and fired until sintering occurs, in order to ensure non-porosity. The internal electrodes may be of rectangular form and cover the whole or part of the area of the adjacent dielectric layers. The internal electrodes in successive layers may be sideways stepped relative to one another or have elongate portions which cross one another, as described in our GB application No. 7841677 (Serial No. 2032689B).

With the originally employed dielectrics the capacitors had to be fired at temperatures of the order of 1200-1400°C, which meant that the internal electrodes had to be of a suitable material to withstand such temperatures and that, therefore, expensive noble metals, such as platinum or palladium had to be used. However, if the firing temperatures could be reduced, by a suitable choice of the dielectric, then internal electrodes with a high silver content (50-100% silver) could be used, thus reducing costs for materials and manufacture. In our GB Application No. 8120605 (Serial No. 2107300B) there is disclosed a dielectric composition which can be fired at a temperature between 950°C and 1100°C and can thus be used with high silver content internal electrodes. These low firing temperature dielectrics comprise lead magnesium niobate ($PbMg_{1/2}Nb_{1/2}O_3$) with one or more of the following, namely lead titanate, lead stannate, lead zirconate, and some of these dielectric compositions have dielectric constants in the range 7500-10000, which makes them particularly suitable for multilayer ceramic capacitors. The conventionally employed ceramics (US coding Z5U) are not compatible with high silver content electrodes and usually have dielectric constants lower than 7500-10000. The electronics industry, generally, requires smaller component, and smaller and cheaper capacitors can be obtained by producing dielectrics which are compatible with high silver content electrodes and even higher dielectric constants than the 7500-10000 range mentioned above with reference to our GB Serial No. 2107300B.

In another GB Application No. 8317265 (Serial No. 2126575B) there is disclosed a dielectric composition comprising lead magnesium niobate ($PbMg_{1/2}Nb_{1/2}O_3$), non-stoichiometric lead iron niobate and one or more oxide additives, which may be chosen from silica, manganese dioxide, ceric oxide, lanthanum oxide, zinc oxide, alumina, tungsten oxide, nickel oxide, cobalt oxide and cuprous oxide. If, for example, three or more oxide additives are chosen from the first eight of the ten mentioned above compositions having firing temperatures between 980°C and 1075°C may be obtained, the dielectric constants after firing being in the range 10600 to 16800, making them particularly suitable for small multilayer ceramic capacitors with high silver content electrodes. Additionally the dielectric composition may comprise lead titanate ($PbTiO_3$).

In our GB Application No. 8405677 (Serial No. 2137187A), there is disclosed a dielectric composition comprising lead magnesium niobate and lead zinc niobate. This dielectric composition may also include one or more oxide additives chosen from silica, manganese dioxide, zinc oxide, nickel oxide, alumina, ceric oxide, lanthanum oxide, tungsten oxide, gallium oxide, titanium dioxide and lead oxide. One or more of the following may also be added to the basic composition, bismuth stannate, bismuth titanate, lead stannate, lead zirconate and lead titanate with or without an oxide additive. Such compositions fire at temperatures between 980°C and 1075°C and have dielectric constants in the range 9000 to 16300 with Z5U temperature dependence characteristics and low tan $\delta$ (%) (dielectric loss).

Lead magnesium niobate is conventionally understood to mean $PbMg_{1/3}Nb_{2/3}O_3$, however the lead magnesium niobate which we have used in all of the dielectric compositions referred to above is not the conventional variety and has been generally referred to as $PbMg_{1/2}Nb_{1/2}O_3$. The material we employed for the results quoted in the above mentioned applications is in fact $PbMg_{0.443}Nb_{0.500}O_3$ and since that approximates to $PbMg_{1/2}Nb_{1/2}O_3$ the latter expression was intially used to distinguish from the conventional $PbMg_{1/3}Nb_{2/3}O_3$. Preferably, however, for our purposes the magnesium was in the range 0.35 to 0.5 and the niobium was in the range 0.4 to 0.6 i.e. $PbMg_{0.35 \text{ to } 0.5}Nb_{0.4 \text{ to } 0.6}O_3$, thus the lead magnesium niobate with which we were concerned was, generally, non-stoichiometric. The expression lead zinc niobate is conventionally understood to mean $PbZn_{1/3}Nb_{2/3}O_3$, however non-stoichiometric versions are also possible and that used in GB Application No. 8405677 (Wheeler 3-IX) was defined as $PbZn_{0.3 \text{ to } 0.5}Nb_{0.6 \text{ to } 0.7}O_3$.

In our GB Application No. 8502054 (Serial No. 2155006A) there is disclosed a ternary dielectric composition comprising non-stoichiometric lead magnesium niobate, non-stoichiometric lead zinc niobate and non-stoichiometric lead iron niobate. These dielectrics have low firing temperatures, typically in the range 950 to 1040°C and high dielectric constants, typically in the range 13900 to 22100 and acceptable values of tan $\delta$ . Typically the ternary composition comprises 50 to 80 wt% non-stoichiometric lead magnesium niobate, 10 to 35 wt% non-stoichiometric lead zinc niobate and 5 to 30 wt% non-stoichiometric lead iron niobate. Lead oxide, up to 10% by weight, may be added to the basic ternary dielectric composition and appears to widen the firing range and improve properties at lower temperatures. The compositions are generally in the EIA Y5V range for temperature coefficient of capacitance, namely between -30°C and 85°C the capacitance variation remains within the band +22% to -82% of the 25°C value. However some compositions are in the EIA Z5U range, namely between 10°C and 85°C the capacitance variation remains within the band +22% to -56% of the 25°C value.

In our European Application No. 86305720.4 there is disclosed a modification of the basic ternary dielectric composition of GB Serial No. 2155006A in order to reduce tan $\delta$ , this being achieved by the addition of small quantities of oxides or other relaxor compounds, such as stoichiometric lead nickel niobate. By relaxor is meant that the dielectric constant decreases with increasing frequency, that is the dielectric constant "relaxes". The niobates of the basic ternary composition are all relaxor compounds. These modified ternary compositions have a largely unchanged temperature coefficient of capacitance, it remaining within the Y5V range, low firing temperature and high dielectric constant.

According to one aspect of the present invention there is provided a dielectric composition characterised in that it comprises one or more of the following, namely: non-stoichiometric lead magnesium niobate, non-stoichiometric lead zinc niobate and non-stoichiometric lead iron niobate; together with another relaxor material having a low Curie point.

According to another aspect of the present invention there is provided a ceramic capacitor characterised in that it includes dielectric comprising one or more of the following, namely non-stoichiometric lead magnesium niobate, non-stoichiometric lead zinc niobate and non-stoichiometric lead iron niobate; together with another relaxor material having a low Curie point.

According to a further aspect of the present invention there is provided a method of manufacturing a dielectric composition, which dielectric comprises non-stoichiometric lead magnesium niobate, non-stoichiometric lead zinc niobate, non-stoichiometric lead iron niobate and lead magnesium tungstate, the method being characterised by the steps of separately preparing each constituent complex niobate and the lead magnesium tungstate and then mixing them together.

There are three basic types of relaxor dielectric compounds, the niobates, the tantalates and the tungstates. Our work in this field has basically concentrated on the niobates, in view of the excellent properties of the dielectrics which we have found it possible to produce from niobates. Tantalates were briefly considered but disregarded basically on the grounds of the high cost relative to niobates. The niobates we have employed were non-stoichiometric, one reason for this was that we required to lower the firing temperature and the more stoichiometric the compositions are the higher the firing temperature.

We have now discovered that the addition of further relaxor materials with a low Curie point to the basic non-stoichiometric niobate compositions with which we have concerned ourselves results in dielectric compositions with even further improved properties, and in particular the addition of lead magnesium tungstate to the ternary dielectric of GB Serial No. 2155006A enables us to produce a composition with high dielectric constant and Z5U temperature coefficient of capacitance characteristics.

The dielectric compositions of the present application are based on a mixture of one or more of the following namely: non-stoichiometric lead magnesium niobate (LMN), non-stoichiometric lead zinc niobate - (LZN) and non-stoichiometric lead iron niobate (LIN) with another relaxor material which has a low Curie point, for example lead magnesium tungstate (LMW) or lead nickel niobate (LNN). Preferably the LMN is $PbMg_{0.35 \text{ to } 0.5}Nb_{0.4 \text{ to } 0.6}O_3$, the LZN is $PbZn_{0.3 \text{ to } 0.5}Nb_{0.6 \text{ to } 0.7}O_3$ and the LIN is $PbFe_{0.25 \text{ to } 0.45}Nb_{0.40 \text{ to } 0.55}O_3$. In the case of the base mixture being the ternary system and including all three constituents, typically it comprises between 50 and 80 wt% LMN, between 10 and 35 wt% LZN and between 5 and wt% LIN.

In the following table measured electrical parameters are quoted for the basic ternary system (base) comprising 65 wt% LMN, 27.5 wt% LZN and 7.5 wt% LIN and prepared by a method comprising preparing each constituent niobate separately and mixing them together following by firing at 1000°C for a time between one and two hours. The LMN was prepared by first reacting $MgO$ and $Nb_2O_5$ together at 1050°C and then mixing with $PbO$ and calcining at 600 at 850°C. The LZN was prepared by reacting together $PbO$, $ZnO$ and $Nb_2O_5$ at 600 to 700°C. The LIN was prepared by reacting together $PbO$, $Fe_2O_3$ and $Nb_2O_5$ at 900 to

3

1100°C. In addition measured electrical parameters are quoted for the addition of lead magnesium tungstate (LMW) at 4.3 wt% and 8.6 wt% to the base material. The LMW employed was stoichiometric, i.e. $PbMg_{\frac{1}{2}}W_{\frac{1}{2}}O_3$. The LMW was prepared by calcining MgO and $WO_3$ at approximately 800°C for 1 to 4 hours. PbO was then added and the mixture calcined at 750°C for 4 hours. To this was added the three niobates separately prepared as above. The compositions were dried, pressed into disc shapes and fired at 1000°C for 2 hours. Aluminium electrodes were suitably evaporated onto a surface thereof to enable the electrical parameters quoted to be measured. The table gives the values of $K_{max}$, the maximum value of dielectric constant; $K_{20}$, the dielectric constant at 20°C; $\tan \delta_{20}$, the dielectric loss at 20°C and $\Delta C$ the temperature coefficient of capacitance.

| | $K_{max}$ | $K_{20}$ | $\tan \delta_{20}$ % | Temp.coeff. $\triangle$C 10°C to 85°C 25°C ref temp | |
| --- | --- | --- | --- | --- | --- |
| | | | | + % | − % |
| Base | 20000 | 19000 | 2.5 | 7.0 | 59 |
| + 4.3wt% LMW | 17000 | 16800 | 2.5 | 2.3 | 55 |
| + 8.6wt% LMW | 13200 | 12000 | 0.8 | 13 | 51 |

The above results indicate that the addition of LMW to the basic ternary composition, which has Y5V temperature coefficient of capacitance characteristics, produces a dielectric composition which is of high dielectric constant and has Z5U temperature coefficient of capacitance as well as reducing $\tan \delta$. Thus a Z5U material can be obtained by modification of a Y5V material. We have already proposed in European Application No. 86305720.4 to modify the Y5V ternary composition to reduce $\tan \delta$ by the addition of simple oxides or other relaxor materials such as LNN. In European Application No. 86305720.4 LNN was added at 0.1% and 1.0% to the base material to reduce $\tan \delta$. However the temperature coefficient of capacitance with these amounts was still outside of the Z5U range. Greater additions up to the order of 4% of LNN bring the temperature coefficient of capacitance within the Z5U range (for 4% LNN the 10°C figure is -15% and the 85°C figure is -50%). Thus it is possible to take a basic material, the ternary composition for example, and modify it any of a number of ways, by simple additions, in order to achieve compositions with desired properties. This helps reduce the costs of producing materials with different properties.

Whereas only LMW added to the ternary non-stoichiometric LMN + LZN + LIN has been so far referred to, it is considered that the addition of LMW to any one or any two of the non-stoichiometric components LMN, LZN and LIN will in general tend to improve the properties thereof. Thus the dielectric compositions may be formulated as follows, namely: (1) non-stoichiometric LMN, non-stoichiometric LZN, non-stoichiometric LIN and stoichiometric LMW; (2) non-stoichiometric LMN, non-stoichiometric LZN and stoichiometrc LMW; (3) non-stoichiometric LMN, non-stoichiometric LIN and stoichiometric LMW; (4) non-stoichiometric LZN, non-stoichiometric LIN and stoichiometric LMW; (5) non-stoichiometric LZN and stoichiometric LMW; (6) non-stoichiometric LIN and stoichiometric LMW. The addition of LMW to non-stoichiometric LMN will result in a dielectric constant which is too low for Z5U, since the Curie point of LMN is already low. However this material may be of interest for other purposes.

The examples quoted in the table incorporate LMW at 4.3 wt% and 8.6 wt%, however it is considered that the additives of LMW would be beneficial in the range 0.5 to l0 wt%. Whereas only LMW and LNN are quoted above, it is considered that other relaxor materials, for example some of the other tungstates, may be added to provide similar improvement or change in characteristics of non-stoichiometric niobate based compositions.

A method of manufacturing a multilayer ceramic capacitor using the dielectric compositions described above may comprise the steps of screen printing a plurality of electrodes on each of a plurality of unfired dielectric sheets with a high silver content ink; assembling a stack of such printed sheets with the electrodes of alternate layers arranged relative to one another as appropriate to the particular constructon employed, for example sideways stepped or overlapping cross-wire; pressing the sheets together with extra blank ceramic sheets applied to the top and bottom of the stack to give an adequate voltage margin, if required; cutting the sheets to form individual capacitor components and firing the individual components at a temperature between 900 and ll00°C. Subsequently the electrodes between every other sheet may be conventionally connected by the appropriate applications of conductive paint, for example, to opposite side faces of the stack.

**Claims**

1. A dielectric composition characterised in that it comprises one or more of the following, namely:
non-stoichiometric lead magnesium niobate,
non-stoichiometric lead zinc niobate and
non-stoichiometric lead iron niobate; together with another relaxor material having a low Curie point.

2. A dielectric composition as claimed in claim l wherein the other relaxor material is lead magnesium tungstate.

3. A dielectric composition as claimed in claim l wherein the other relaxor material is stoichiometric lead magnesium tungstate.

4. A dielectric composition as claimed in claim l and comprising a base material of nor-stoichiometric lead magnesium niobate, non-stoichiometric lead zinc niobate and non-stoichiometric lead iron niotate together with up to l0 wt% lead magnesium tungstate which comprises said other relaxor material.

5. A dielectric composition as claimed in claim 4 wherein the base material comprises between 50 and 80 wt% non-stoichiometric lead magnesium niobate, between l0 and 35 wt% non-stoichiometric lead zinc niobate and between 5 and 30 wt% non-stoichiometric lead iron niobate.

6. A dielectric composition as claimed in claim 5 and wherein the base material comprises 65 wt% non-stoichiometric lead magnesium niobate, 27.5 wt% non-stoichiometric lead zinc niobate and 7.5 wt% non-stoichiometric lead iron niobate.

7. A dielectric composition as claimed in claim l wherein the other relaxor material is lead nickel niobate.

8. A ceramic capacitor characterised in that it includes dielectric comprising one or more of the following, namely non-stoichiometric lead magnesium niobate, non-stoichiometric lead zinc niobate and non-stoichiometric lead iron niobate; together with another relaxor material having a low Curie point.

9. A ceramic capacitor as claimed in claim 8 wherein the other relaxor material is lead magnesium tungstate.

l0. A ceramic capacitor as claimed in claim 8 wherein the dielectric material comprises a base material of non-stoichiometric lead magnesium niobate, non-stoichiometric lead zinc niobate and non-stoichiometric lead iron niobate together with up to l0 wt% lead magnesium tungstate which comprises said other relaxor material.

ll. A method of manufacturing a dielectric composition, which dielectric comprises non-stoichiometric lead magnesium niobate, non-stoichiometric lead zinc niobate, non-stoichiometric lead iron niobate and lead magnesium tungstate, the method being characterised by the steps of separately preparing each constituent complex niobate and the lead magnesium tungstate and then mixing them together.

## DOCUMENTS CONSIDERED TO BE RELEVANT

EP 86309476.9

| Category | Citation of document with indication. where appropriate, of relevant passages | Relevant to claim | CLASSIFICATION OF THE APPLICATION (Int. Cl.4) |
|---|---|---|---|
| X | <u>JP - A2 - 59-105 206</u> (MATSUSHITA)<br>* Claim; table *<br>& Chemical Abstracts; Columbus, Ohio, USA, vol. 101, no. 22, November 26, 1984, page 689<br>* Abstract-no. 202 753n *<br>-- | 1,7,8 | H 01 B 3/12<br>H 01 G 4/12<br>C 04 B 35/00 |
| X;Y | <u>JP - A2 - 57-67 209</u> (NIPPON ELECTRIC)<br>* Claim; table *<br>& Chemical Abstracts; Columbus, Ohio, USA, vol. 97, no. 6, August 9, 1982, page 612<br>* Abstract-no. 48 289f *<br>-- | 1-3,8, 9;<br>5,6, 10,11 | |
| Y | <u>EP - A2 - 0 154 456</u> (STANDARD TELEPHONES)<br>* Claims *<br>-- | 5,6, 10,11 | TECHNICAL FIELDS SEARCHED (Int. Cl.4) |
| X | <u>JP - A2 - 60-131 856</u> (MATSUSHITA)<br>* Claim; table *<br>& Chemical Abstracts; Columbus, Ohio, USA, vol. 104, no. 4, January 27, 1986, page 245<br>* Abstract-no. 23 377h *<br>-- | 1-3,8, 9 | H 01 B 3/00<br>H 01 G 4/00<br>C 04 B 35/00 |

The present search report has been drawn up for all claims

| Place of search | Date of completion of the search | Examiner |
|---|---|---|
| VIENNA | 27-04-1987 | KUTZELNIGG |

European Patent Office

# EUROPEAN SEARCH REPORT

Application number

| DOCUMENTS CONSIDERED TO BE RELEVANT | | | EP 86309476.9 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | AMERICAN CERAMIC SOCIETY BULLETIN, Columbus, Ohio, USA, vol. 64, no. 9, September 1985<br><br>KASSARJAN et al.: "Reduction of dosses in Lead-Iron-Niobate Dielectric Ceramics."<br>pages 1245-1248<br><br>   * Page 1245, right hand column; page 1247, left hand column *<br><br>   ---- | 1,8,11 | |
| | | | **TECHNICAL FIELDS SEARCHED (Int. Cl.4)** |

The present search report has been drawn up for all claims

| Place of search | Date of completion of the search | Examiner |
|---|---|---|
| VIENNA | 27-04-1987 | KUTZELNIGG |